(19)

Europäisches
Patentamt
European
Patent Office
Office européen
des brevets

(11)  **EP 2 663 137 A1**

(12)  **EUROPEAN PATENT APPLICATION**

(43) Date of publication:
**13.11.2013 Bulletin 2013/46**

(51) Int Cl.:
**H04W 52/32** (2009.01)          **H04W 52/34** (2009.01)

(21) Application number: **12360035.5**

(22) Date of filing: **10.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Wong, Shin Horng
  Chippenham, Wiltshire SN15 3YB (GB)**
• **Baker, Matthew P. J.
  Canterbury, kent CT2 9DB (GB)**

(74) Representative: **Script IP Limited
Turnpike House
18 Bridge Street
Frome BA11 1BB (GB)**

(54)  **Uplink transmission power control in MIMO systems**

(57)      A method of adapting transmission power of one or more physical channels operable to support signalling for use in channel estimation in α wireless telecommunications network, the signalling being transmitted by user equipment transmitting according to uplink MIMO protocols, user equipment and α computer program product operable to perform that method. The method comprises: receiving an indication of α target total transmission power of channel estimation signalling; determining α set of physical channels operating to support the signalling for use in channel estimation; assessing total transmission power of the set of physical channels operating to support the signalling for use in channel estimation; and, adapting transmission power of one or more of the set of physical channels operating to support the signalling for use in channel estimation if the total transmission power does not meet the target total transmission power of channel estimation signalling. Aspects aim to prevent over (or under) boosting transmission power of α control channel for user equipment operating according to uplink MIMO protocols.

FIGURE 3 : UL MIMO channel structure

**Description**

FIELD OF THE INVENTION

The present invention relates to a method of adapting transmission power of one or more physical channels operable to support signalling for use in channel estimation in a wireless telecommunications network, said signalling being transmitted by user equipment transmitting according to uplink MIMO protocols, a computer program product and user equipment operable to perform that method.

BACKGROUND

Wireless telecommunications systems are known. In those known systems, radio coverage is provided to user equipment, for example, mobile telephones, by geographical area. A base station is located in each geographical area to provide the required radio coverage. User equipment in the area served by a base station receives information and data from the base station and transmits information and data to the base station. In a high-speed packet access (HSPA) telecommunications network, data and information is sent between user equipment and a base station in data packets on a radio frequency carrier.

Information and data transmitted by the base station to the user equipment occurs on radio frequency carriers known as downlink carriers. Information and data transmitted by user equipment to the base station occurs on radio frequency carriers known as uplink carriers.

In known wireless HSPA telecommunication systems, user equipment can move between geographical base station coverage areas. Service provided to user equipment is overseen by a radio network controller (RNC). The radio network controller communicates with user equipment and base stations and determines which base station, and which cell of the geographical area served by that base station each user equipment is primarily connected to (known as the "serving cell"). Furthermore, a radio network controller acts to control and communicate with a base station and user equipment when user equipment moves from the geographical area served by one base station to a geographical area served by another base station.

Multiple-Input, Multiple-Output (MIMO) techniques may be employed within a communications system to improve reliability of communications between a base station and user equipment and to provide for an increase in data throughput in a network.

It will be appreciated that a signal transmitted between user equipment and a base station over a radio channel typically experiences many propagation paths, for example, due to reflection, before arriving at a base station receiver. Multiple-Input, Multiple-Output (MIMO) techniques include the use of transmissions made from more than one antenna provided at user equipment and base stations. Uplink MIMO requires more than one antenna to be provided at user equipment. The antenna are physically separated. A signal may be sent to a base station on one or more of those antenna(s) provided at user equipment. The signal arriving at a base station from two antennas may, assuming the received signals are not too closely correlated, be decoded by the base station and can thus result in an increase in data throughput from user equipment to the base station.

Implementing uplink MIMO within a network may lead to unexpected consequences and possibly decreased overall efficiency of operation of a wireless telecommunication network.

Accordingly, it is desired to improve the operation of a wireless telecommunications network having uplink MIMO functionality.

SUMMARY

A first aspect provides a method of adapting transmission power of one or more physical channels operable to support signalling for use in channel estimation in a wireless telecommunications network, the signalling being transmitted by user equipment transmitting according to uplink MIMO protocols, the method comprising: receiving an indication of a target total transmission power of channel estimation signalling; determining a set of physical channels operating to support the signalling for use in channel estimation; assessing total transmission power of the set of physical channels operating to support the signalling for use in channel estimation; and, adapting transmission power of one or more of the set of physical channels operating to support the signalling for use in channel estimation if the total transmission power does not meet the target total transmission power of channel estimation signalling.

The first aspect recognizes that uplink MIMO is a method according to which a signal from user equipment can be transmitted over two or more antennas, and that method may allow for improved communication between user equipment and a base station by offering a chance to increase overall uplink data throughput by transmitting more than one data stream.

It will be appreciated that, even if user equipment is provided with two or more transmission antennas, it may not be operable to make use of all its available transmit antennas. A base station needs to be able to separate signals being sent by user equipment on more than one antenna but using the same uplink resource (frequency time and code) in order for MIMO transmissions from that user equipment to be successfully received and decoded.

MIMO is a multi-dimensional technology which increases wireless spectrum utilization by a factor equivalent to the number of transmit streams (also known as MIMO rank). MIMO controls in a linear system are typically described by a matrix. The rank of the matrix is the number of independent rows or columns. It will be understood that and it is most efficient for the overall operation of the network if it is possible to utilize full MIMO rank.

For example, if user equipment is able to transmit two streams of E-DCH (Enhanced Dedicated Channel) packets in the uplink using the same uplink resource (frequency, time and code) that user equipment is capable of performing up to a rank 2 transmission. It will be understood that a single E-DCH stream from a single antenna would be considered to be a rank 1 transmission.

The data streams, for example, E-DCH, transmitted by user equipment typically comprise one or more E-DPDCH (E-DCH Dedicated Physical Data Channel) channels and one E-DPCCH (E-DCH Dedicated Physical Control Channel). The E-DPDCH carry data traffic and the E-DPCCH carries information to allow decoding of the E-DPDCH. If user equipment is operable to transmit more than one E-DCH, then a secondary E-DCH stream is sent together with the primary E-DCH stream. Similar to the primary E-DCH, the secondary E-DCH will typically comprise one or more secondary E-DPDCH (S-E-DPDCH). The secondary E-DPCCH (S-E-DPCCH) which carries information to allow decoding of the S-E-DPDCH, is not itself carried on the secondary stream but instead carried on the primary stream. The S-E-DPCCH is sent using primary precoding vectors (i.e. via the primary stream) whilst the S-E-DPDCHs are sent using secondary precoding vectors (i.e. via the secondary stream). The S-E-DPCCH contains decoding information for the S-E-DPDCHs. The presence and absence of S-E-DPCCH is also used to implicitly indicate the rank of the UE transmission.

It will be understood that for each antenna the user equipment is also operable to send a pilot channel; in this instance, primary and secondary pilots respectively are referred to as DPCCH and S-DPCCH.

The information carried on a control channel, for example, E-DPCCH, comprises an E-DCH transport format indicator, which indicates transport block size, modulation and coding used on E-DPDCHs, together with a retransmission sequence number for HARQ processes and a so-called "Happy Bit". That control channel information is used by a base station to assist decoding of data carried on a dedicated data traffic channel.

The happy bit is used by a base station to determine whether a user equipment is happy or otherwise with current allocated uplink resource. If the Happy Bit is set to zero, the user equipment is indicating, via signaling to the network, that it would like to be able to transmit at a higher rate than has currently been granted by the network. Conversely, if the Happy Bit is set to 1, the user equipment is indicating that it is happy with its current level of resource grant.

Channel estimation is used within the network to improve reception and decoding within a network. Channel estimation is typically based on the pilot channel. It will be understood that the better the channel estimation in a network, the more likely it will be that data packets transmitted within a network can be large and successfully decoded. One option to improve channel estimation within a network would be to transmit a pilot signal at a higher power, thus enabling better channel estimation to be made. However, since transmission power from user equipment may be subject to an upper threshold set by the network, transmission of other channels is set having regard to pilot power, and available power and operational lifetime may be battery limited, a direct increase in pilot transmission power to improve channel estimation may not be beneficial to overall network operation.

It is recognized that in a non-MIMO scenario, control channels within the network, once decoded to provide the necessary information to decode data traffic channels, can be used to "boost" a pilot for the purposes of channel estimation. In particular, the E-DPCCH signal can be used as an additional pilot to improve the channel estimation for demodulating the E-DCH data.

In order to gain most benefit from a control channel as a pilot boost, the power of the control channel, for example, E-DPCCH, is itself boosted when a large E-DCH transport block size (TBS) is selected for transmission, thus enabling a boost to enhance the pilot for channel estimation. In particular, the control channel, for example, E-DPCCH, is boosted if the selected E-TFCI (an index indicating transport block size) is greater than a configured level of E-TFCI known as *"E-TFCI$_{ec,boost}$"*. The amount of control channel power boost is selected to satisfy a target "Traffic to Total Pilot power ratio" offset ($\Delta$T2TP). $\Delta$T2TP is configured by the network and is signaled to the UE.

The first aspect recognizes that in an uplink MIMO capable network, the secondary control channels, for example, S-E-DPCCH, can be used to boost the pilot to improve channel estimation. The presence of S-E-DPCCH in, for example, a rank 2 transmission would directly boost the pilot power. Thus using the legacy procedure in which only a single control channel is expected on a carrier, the total pilot power may cause the resultant $\Delta$T2TP to exceed a targeted $\Delta$T2TP. The first aspect and embodiments thereof aim to define a rule for boosting pilot power which is applicable to the possible presence of one or more secondary control channels, for example, S-E-DPCCH, as well as a primary control channel, for example, E-DPCCH. By taking into account the secondary control channels, it may be possible to avoid over-boosting the total pilot power.

In one embodiment, the set of physical channels operating to support the signalling for use in channel estimation comprises a pilot channel, a primary control channel and at least one secondary control channel. Accordingly, existing non-pilot physical channels provided within a network may be used to boost a pilot channel without needing to boost the pilot channel itself.

In one embodiment, the primary control channel comprises an E-DPCCH and said at least one secondary control channel comprises an S-E-DPCCH, those channels being transmitted by said user equipment on an identical E-DCH stream. Accordingly, where a plurality of physical channels are transmitted on a single E-DCH channel by user equipment operating according to uplink MIMO protocols, two or more of those physical channels can be utilised for the purposes of channel estimation and may contribute to a total target transmit power to achieve a desired target suited to channel estimation in a network.

According to one embodiment, the method further comprises: adjusting transmission power of one or more of the control channels. Accordingly, the pilot transmit power may remain unchanged and a boost may be provided to the pilot, in terms of operation for channel estimation purposes, by one or more of the physical control channels provided. By using the control channels rather than the pilot itself, efficient overall operation of user equipment in which total transmit power is subject to restrictions may be optimised.

According to one embodiment, the method further comprises: determining a minimum transmission power of a physical channel operating to support the signalling for use in channel estimation, and adjusting transmission power of one or more of the control channels subject to the minimum transmission power of the physical channel operating to support the signalling for use in channel estimation. Accordingly, it is possible that simply reducing "boosting" of a primary control channel, for example, E-DPCCH, by the amount of transmission power of the secondary control channel, for example, S-E-DPCCH, could result in a "negative boost" being applied to the primary control channel, or E-DPCCH. Such a negative boost may reduce the power of the primary control channel, or E-DPCCH, below a level that is required for reliable decoding of that control channel. As a result, according to some embodiments, a "max" function is used to ensure sufficient power remains used for transmission of the primary control channel.

In one embodiment, the received indication of a target total transmission power of channel estimation signalling comprises a target total transmission power for user equipment operating according to non-uplink MIMO protocols and the method further comprises: adjusting the target total transmission power of channel estimation signalling by a predetermined offset calculated for uplink MIMO operation. Accordingly, no additional signalling from the network to user equipment may be required, the signalling remaining that of a legacy (non-uplink MIMO) arrangement, and user equipment may be preconfigured to take into account transmission of a secondary control channel when calculating and implementing a method to meet a target transmission power for channel estimation purposes.

According to one embodiment, $P_{Offset}$ is deducted from the boosted total pilot power calculated using legacy method in Section 5.1.2.5B.1 of TS25.214, subject to the size of the boost after reduction not being less than zero.

According to one embodiment, a gain factor calculated for boosting a primary control channel, for example, E-DPCCH, is reduced by $P_{Offset}$ (in dB) to give an adjusted gain factor for a boosted E-DPCCH. If the adjusted gain factor results in a negative gain then no boosting is made on the E-DPCCH. A negative gain has been calculated because the amount of power boosting that would have been required on the primary control channel, E-DPCCH, in the absence of S-E-DPCCH, has already been contributed by the presence of S-E-DPCCH in uplink MIMO operation.

In one embodiment, the method further comprises receiving an indication of the predetermined offset calculated for uplink MIMO operation. That offset may be used to update a non-MIMO target for use in an uplink MIMO mode of operation. The offset may be configured and hardcoded at user equipment or may be signalled to user equipment operating within a network in, for example, a system information broadcast message.

In one embodiment, the method further comprises receiving an indication of a threshold data transmission rate at which the method of adapting is to be implemented by user equipment; and implementing the method of adapting when the threshold data transmission rate is passed. In one embodiment, the indication of a threshold data transmission rate comprises an E-TFCI.

It will be understood that the need to boost pilot power for the purposes of channel estimation is dependent upon the transport block size being used for packet data transmissions. The greater the size of transport block size, the greater the need for good channel estimation. Transport block size used is indicated by E-TFCI. A transmission rate at which pilot boosting can be useful can be indicated to user equipment, that is to say, according to some embodiments, pilot power boosting by boosting one or more of: pilot power, primary control channel power, or secondary control channel power, may be triggered only when the transport block size exceeds a predetermined threshold.

According to some embodiments, a separate $E\text{-}TFCI_{ec,boost}$, namely $E\text{-}TFCI_{ec,boost,MIMO}$ (i.e. the E-DPDCH transmission rate at which boosting the E-DPCCH begins) is signalled to user equipment for rank 2 or higher transmissions. It will be understood that E-$TFCI_{ec,boost,MIMO}$ takes into account $P_{Offset}$ and is used when user equipment is transmitting using rank 2 or higher. In other cases, when transmitting in rank 1, user equipment is operable to use legacy $E\text{-}TFCI_{ec,boost}$ in determining when pilot power boosting may required.

It will be appreciated that the concepts of having MIMO uplink parameters, $\Delta T2TP_{MIMO}$ and $E\text{-}TFCI_{ec,boost,MIMO}$, in relation to boost calculations may be combined as appropriate.

A second aspect provides a computer program product operable, when executed on a computer, to perform the method of the first aspect.

A third aspect provides user equipment operable to adapt transmission power of one or more physical channels operable to support signalling for use in channel estimation in a wireless telecommunications network, the signalling being transmitted by the user equipment transmitting according to uplink MIMO protocols, the user equipment comprising: reception logic operable to receiving an indication of a target total transmission power of channel estimation signalling; determination logic operable to determine a set of physical channels operating to support the signalling for use in channel estimation; assessment logic operable to assess total transmission power of the set of physical channels operating to support the signalling for use in channel estimation; and, adaptation logic operable to adapt transmission power of one or more of the set of physical channels operating to support the signalling for use in channel estimation if the total transmission power does not meet the target total transmission power of channel estimation signalling.

In one embodiment, the set of physical channels operating to support said signalling for use in channel estimation comprises a pilot channel, a primary control channel and at least one secondary control channel.

In one embodiment, the primary control channel comprises an E-DPCCH and the at least one secondary control channel comprises an S-E-DPCCH, those channels being transmitted by the user equipment on an identical E-DCH stream.

In one embodiment, the adjustment logic is operable to adjust transmission power of one or more of the physical control channels.

In one embodiment, the user equipment further comprises: determination logic operable to determine a minimum transmission power of a physical channel operating to support the signalling for use in channel estimation, and adjusting transmission power of one or more of the control channels subject to the minimum-transmission power of the physical channel operating to support the signalling for use in channel estimation.

In one embodiment, the received indication of a target total transmission power of channel estimation signalling comprises a target total transmission power for user equipment operating according to non-uplink MIMO protocols and the adjustment logic is operable to adjusting the target total transmission power of channel estimation signalling by a predetermined offset calculated for uplink MIMO operation.

In one embodiment, the reception logic is operable to receive an indication of said predetermined offset calculated for uplink MIMO operation.

In one embodiment, the user equipment further comprises threshold reception logic operable to receive an indication of a threshold data transmission rate at which the adaptation logic is to implement an adaptation and implementation logic operable to implement adaptation when the threshold data transmission rate is passed.

In one embodiment, the indication of a threshold data transmission rate comprises an E-TFCI.

A further aspect provides a method of adapting transmission power of one or more physical channels in a wireless telecommunications network, the method comprising: receiving an indication of a target total transmission power of a set of physical channels; assessing total transmission power of the set of physical channels; and adapting transmission power of one or more of the set of physical channels if the total transmission power does not meet the target total transmission power of channel estimation signalling.

In one embodiment, the set of physical channels comprises a pilot channel, a primary control channel and at least one secondary control channel.

In one embodiment, primary control channel comprises an E-DPCCH and said at least one secondary control channel comprises an S-E-DPCCH, those channels being transmitted on an identical DCH stream. Accordingly, the primary and secondary control channel have the same precoding.

In one embodiment, the method further comprises: adjusting transmission power of one or more of the control channels.

In one embodiment, the method further comprises: determining a minimum transmission power of a physical channel, and adjusting transmission power of one or more of the control channels subject to the minimum transmission power of the physical channel.

In one embodiment, the received indication of a target total transmission power of channel estimation signalling comprises a target total transmission power for user equipment operating without any secondary control channels and the method further comprises: adjusting the target total transmission power of channel estimation signalling by a predetermined offset calculated for operation with at least one secondary control channel.

In one embodiment, the method further comprises receiving an indication of the predetermined offset calculated for operation with at least one secondary control channel.

In one embodiment, the method further comprises: receiving an indication of a threshold data transmission rate at which the method of adapting is to be implemented; and implementing the method of adapting when the threshold data transmission rate is passed.

In one embodiment, the indication of a threshold data transmission rate comprises an E-TFCI.

Further particular and preferred aspects are set out in the accompanying independent and dependent claims.

Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates a wireless telecommunications system according to one embodiment;
Figure 2 illustrates schematically typical propagation paths between a transmitter and a receiver;
Figure 3 illustrates schematically an implementation of uplink MIMO at user equipment according to one embodiment;
Figure 4 illustrates schematically a control message format for transmission on an E-DPCCH.

DETAILED DESCRIPTION OF THE DRAWINGS

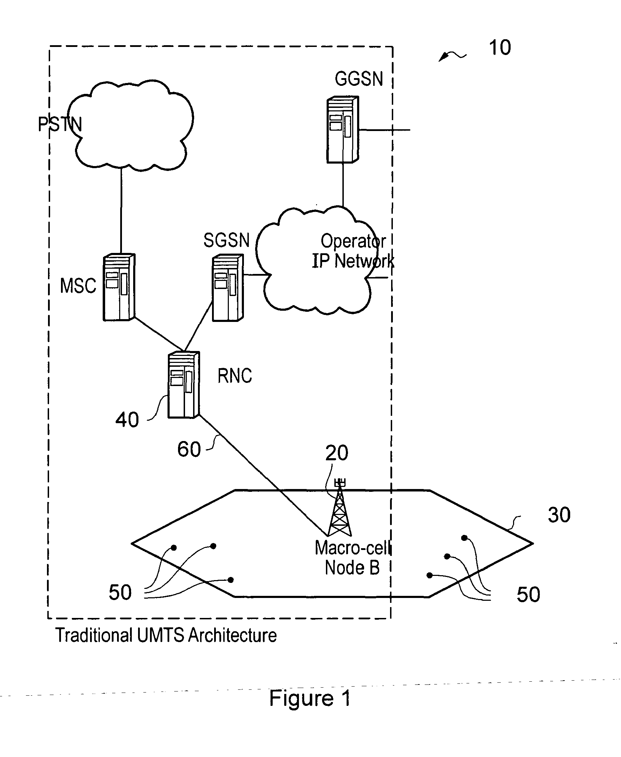

Figure 1 illustrates a wireless telecommunications system 10 according to one embodiment. User equipment 50 roam through the wireless telecommunications system. Base stations 20 are provided which support areas of radio coverage 30. A number of such base stations 20 are provided and are distributed geographically in order to provide a wide area of coverage to user equipment 50. When user equipment is within an area served by a base station 30, communications may be established between the user equipment and the base station over associated radio links. Each base station typically supports a number of sectors within the geographical area of service 30.

Typically a different antenna within a base station supports each associated sector. Accordingly, each base station 20 has multiple antennas and signals sent through the different antennas are electronically weighted to provide a sectorised approach. Of course, it will be appreciated that Figure 1 illustrates a small subset of the total number of user equipment and base stations that may be present in a typical communications system.

The radio access network of the wireless communications system is managed by a radio network controller (RNC) 40. The radio network controller 40 controls operation of the wireless communications system by communicating with a plurality of base stations over a backhaul communications link 60. The network controller also communicates with user equipment 50 via each base station.

A radio network controller 60 maintains a neighbour list which includes information about geographical relationships between sectors supported by base stations 20. In addition, the radio network controller 60 maintains location information which provides information on the location of user equipment 50 within the wireless communication system 10. The radio network controller is operable to route traffic via circuit switched and packet switched networks. Hence, a mobile switching centre is provided with which the radio network controller may communicate. The mobile switching centre can communicate with a circuit switched network such as a public switched telephone network (PSTN) 70. Similarly, a network controller can communicate with service general package radio service support nodes (SGSNs) and a gateway general packet support node (GGSN). The GGSN can communicate with a packet switched core such as, for example, the Internet.

User equipment 50 typically transmits information and data to a base station 20 so that it can be re-routed within a wireless telecommunications network. User equipment may, for example, need to transmit data to the base station in order to relay text messages, voice information when a user is using the equipment to make a telephone call, or other data. The base station 20, in combination with parameters set by the radio network controller 40, allocates resources to user equipment in a manner that aims to optimise operation of the wireless telecommunications network 10.

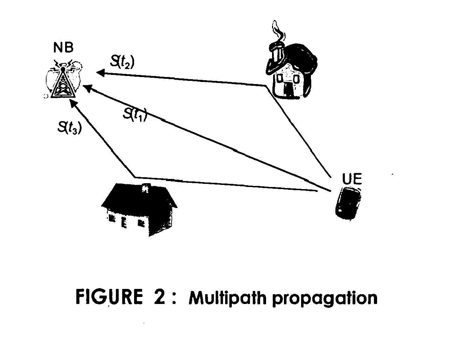

Figure 2 illustrates schematically typical propagation paths between a transmitter, in this case, user equipment 50 and a receiver on a base station 20. A signal transmitted over a radio channel typically experiences many propagation paths, for example, due to reflection, before arriving at a receiver. Those signal paths are represented as $S(f_1)$, $S(f_2)$, and $S(f_3)$ in Figure 2, and each arrive at different time, power and phase at the receiver. Changes to the transmitter position or the transmitter surroundings causes the multiple propagation path signals to change, leading to fluctuation in the signal at the receiver. A base station can decode different MIMO data streams carried on a radio channel provided that they transmitted by spatially separate antenna and provided the streams are not too well correlated by the time they reach the base station.

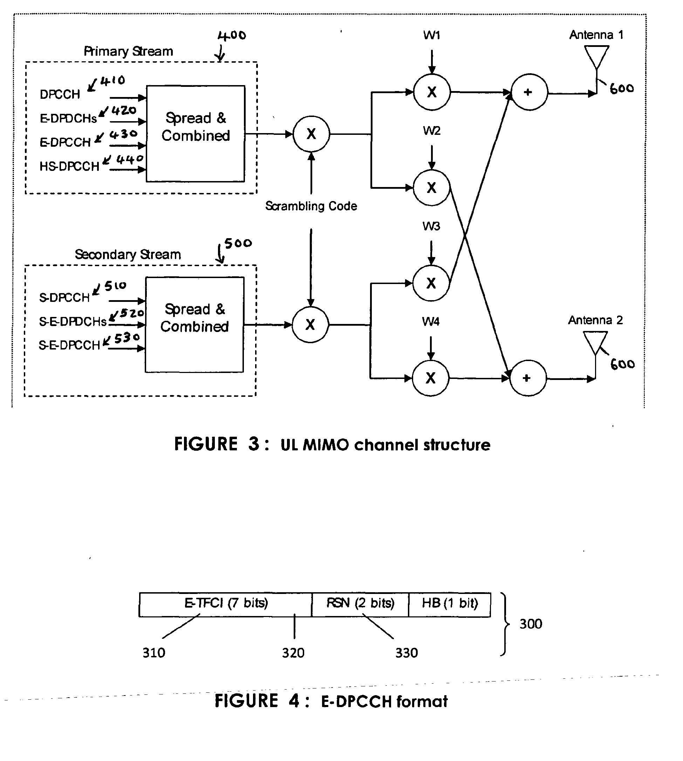

Figure 3 illustrates schematically an example implementation of MIMO uplink techniques at a user equipment having two transmit antennas. In the structure illustrated in Figure 3, user equipment is operable to transmit a primary stream 400 and a secondary stream 500. The primary stream comprises a pilot channel (DPCCH 410), Dedicated Physical Data Channels 420, control channels 430 and a downlink feedback channel 440. The secondary stream 500 comprises a pilot channel 510, Dedicated Physical Data Channels 520 and control channels 530. The weights W1, W2, W3 and W4 are pre-coding weights signaled by a base station to user equipment to ensure effective MIMO transmissions from antenna 600.

More than one stream of information can be sent using the same time frequency and code resource in MIMO if the paths taken by the streams received by a base station are uncorrelated. Streams of data sent by user equipment are likely to experience different gains (that is to say, different Eigen values of a MIMO channel matrix). For an uplink MIMO case operating according to a transmission scenario in which two streams are supported, the primary stream is decoded usually with a higher gain than that of the secondary stream; that is to say, the primary stream is often better received than the secondary stream. As a result, the primary stream is usually selected as the stream which also contains other essential control channels (for example, downlink feedback information).

In order to operate an uplink MIMO (Multiple Input, Multiple Output), user equipment is able to transmit two or more streams of E-DCH (Enhanced Dedicated Channel) in the uplink using the same uplink resource. That is to say, the uplink resource allocated to the user equipment uses the same frequency, time and code that is spatially separated by transmission on two or more different antenna. As a result, user equipment is capable of performing what is known as a "rank 2" transmission. A single E-DCH stream would be referred to as a "rank 1 " transmission.

Traditionally, an E-DCH transport channel is structured such that E-DCH transport channel data is carried on one or more E-DPDCHs (E-DCH Dedicated Physical Data Channels) and associated control signaling is carried on an E-DPCCH (E-DCH Dedicated Physical Control Channel). The information carried on the Dedicated Physical Control Channel comprises an E-DCH transport format indicator which indicates transport block size, modulation and coding used on the Dedicated Physical Data Channels, a retransmission sequence number which is used in HARQ processes, and a "Happy Bit".

The Happy Bit is used by user equipment to indicate to the network, and in particular via its serving base station, whether it would like to be able to transmit at a higher rate than it has currently been granted, or whether it is happy with its current level of uplink resource grant. If the Happy Bit is set to zero, it is indicative that the user equipment would ideally like to be able to transmit at a higher rate than has currently been granted by a base station, whereas if the Happy Bit is set to 1, the user equipment is indicating that it is happy with its current rate of grant.

If user equipment is operable to support uplink MIMO, a second E-DCH stream is carried on a secondary E-DPDCH (S-E-DPDCH) and a new control channel is introduced to carry corresponding control information, namely a secondary E-DPCCH. That secondary control channel is carried on the primary stream and the presence, or absence of the second control channel can be used to implicitly indicate the rank of an uplink transmission. It will be understood that the S-E-DPDCH and S-E-DPCCH have similar functions to those of the E-DPDCH and E-DPCCH provided on a primary stream.

If a base station and user equipment are configured such that they can support MIMO operation, a base station is operable to evaluate uplink radio condition at user equipment and determine whether that user equipment is a suitable candidate to transmit on according to a rank 1 or rank 2 (or greater) signaling regime. That maximum determined rank is usually signaled to the user equipment by the base station.

At the user equipment, the user equipment is operable to evaluate whether it is able to utilize its full rank or whether network conditions are such that the signaled maximum rank indication received from a base station is not possible and a lower rank transmission is more appropriate. For example, user equipment may evaluate whether it has sufficient power to transmit using the maximum indicated rank (in this case, rank 2), or whether a higher overall throughput may be achieved by simply using rank 1 signaling. Thus, a rank indicated by a base station to user equipment represents a maximum rank on which user equipment may be allowed to transmit within the network.

Figure 4 illustrates schematically a control message format for transmission on an E-DPCCH. The control message 300 generally comprises seven bits allocated to E-TFCI signaling 310, two bits for Retransmission Sequence Number (RSN) signaling 320 and one bit as a Happy Bit 330. The E-TFCI 410 indicates the transport block size used for the corresponding E-DPDCH and the RSN indicates the $n^{th}$ HARQ retransmission of the corresponding E-DPDCH. The Happy Bit 330 indicates whether the user equipment would benefit from having more uplink resource where a value of 1 indicates that the user equipment is happy with current uplink resource, whilst a value of zero indicates that the user equipment is not happy with the current resource and would benefit from having more.

The control message format for transmission on a secondary MIMO channel is expected to be analogous to that shown in Figure 4. That is to say, the S-E-DPCCH would typically contain the same fields as that shown in Figure 4.

Channel estimation is used within the network to improve reception and decoding within a network. Channel estimation is typically based on the pilot channel. It will be understood that the better the channel estimation in a network, the more likely it will be that data packets transmitted within a network can be large and successfully decoded. One option to improve channel estimation within a network would be to transmit a pilot signal at a higher power, thus enabling better channel estimation to be made. However, since transmission power from user equipment may be subject to an upper threshold set by the network, transmission of other channels is set having regard to pilot power, and available power and operational lifetime may be battery limited, a direct increase in pilot transmission power to improve channel estimation may not be beneficial to overall network operation.

It is recognized that in a non-MIMO scenario, control channels within the network, once decoded to provide the necessary information to decode data traffic channels, can be used to "boost" a pilot for the purposes of channel estimation. In particular, the E-DPCCH signal can be used as an additional pilot to improve the channel estimation for demodulating the E-DCH data.

In order to gain most benefit from a control channel as a pilot boost, the power of the control channel, for example, E-DPCCH, is itself boosted when a large E-DCH transport block size (TBS) is selected for transmission, thus enabling a boost to enhance the pilot for channel estimation. In particular, the control channel, for example, E-DPCCH, is boosted if the selected E-TFCI (an index indicating transport block size) is greater than a configured level of E-TFCI known as "$E\text{-}TFCI_{ec,boost}$". The amount of control channel power boost is selected to satisfy a target "Traffic to Total Pilot power ratio" offset ($\Delta$T2TP). $\Delta$T2TP is configured by the network and is signaled to the UE.

The first aspect recognizes that in an uplink MIMO capable network, the secondary control channels, for example, S-E-DPCCH, can be used to boost the pilot to improve channel estimation. The presence of S-E-DPCCH in, for example, a rank 2 transmission would directly boost the pilot power. Thus using the legacy procedure in which only a single control channel is expected on a carrier, the total pilot power may cause the resultant $\Delta$T2TP to exceed a targeted $\Delta$T2TP. The first aspect and embodiments thereof aim to define a rule for boosting pilot power which is applicable to the possible presence of one or more secondary control channels, for example, S-E-DPCCH, as well as a primary control channel, for example, E-DPCCH. By taking into account the secondary control channels, it may be possible to avoid over-boosting the total pilot power.

Before describing aspects and embodiments in detail a general overview will be provided. Aspects recognize that the likelihood of overboosting can be avoided by reducing the boost that is calculated for a primary control channel, for example, E-DPCCH, by an amount $P_{Offet}$ that is proportional to the power of secondary control channel(s) provided on a carrier, for example, S-E-DPCCH.

Aspects thus provide a method for boosting the power of a first physical channel (E-DPCCH) such that the sum of the powers of the first physical channel and a second physical channel (DPCCH) is equal to a predetermined total power when a third physical channel (S-E-DPCCH) is not transmitted, and is equal to the greater of:

(a) the predetermined total power minus the power of the third physical channel when the third physical channel is transmitted; and
(b) the sum of the power of the first physical channel without any boosting applied and the power of the second physical channel.

According to one embodiment, $P_{Offset}$ is deducted from the boosted total pilot power calculated using legacy method in Section 5.1.2.5B.1 of TS25.214, subject to the size of the boost after reduction not being less than zero.

According to one embodiment, a gain factor calculated for boosting a primary control channel, for example, E-DPCCH, is reduced by $P_{Offset}$ (in dB) to give an adjusted gain factor for a boosted E-DPCCH. If the adjusted gain factor results in a negative gain then no boosting is made on the E-DPCCH. A negative gain has been calculated because the amount of power boosting that would have been required on the primary control channel, E-DPCCH, in the absence of S-E-DPCCH, has already been contributed by the presence of S-E-DPCCH in uplink MIMO operation.

Of course, according to come embodiments, a secondary control channel, for example, S-E-DPCCH, if present, can be boosted to meet a target pilot power for optimal channel estimation and, in such cases, the $P_{Offset}$ may take into account a boost made to a secondary control channel, for example, S-E-DPCCH, power.

According to one embodiment, a separate $\Delta$T2TP is calculated for use in a scenario in which uplink MIMO is available. That MIMO-based parameter, $\Delta$T2TP$_{MIMO}$, is signalled to UE for use in the case of multi-stream MIMO transmission. That is to say, $\Delta$T2TP$_{MIMO}$ is used when UE is transmitting in rank 2 (or greater) (i.e. when a secondary control channel, for example, S-E-DPCCH, is transmitted), otherwise a legacy parameter, $\Delta$T2TP, is used.

$\Delta$T2TP represents the sum of the powers of a pilot channel and control channel, for example, DPCCH and E-DPCCH. $P_{Offset}$ is taken into account when calculating $\Delta$T2TP$_{MIMO}$ and, as a consequence, a lower T2TP is required when one or more secondary control channels, for example, S-E-DPCCH, are transmitted when data transmission occurs according to a rank 2 or greater mode of uplink MIMO operation.

It will be understood that the need to boost pilot power for the purposes of channel estimation is dependent upon the transport block size being used for packet data transmissions. The greater the size of transport block size, the greater the need for good channel estimation. Transport block size used is indicated by $E\text{-}TFCI$. A transmission rate at which pilot boosting can be useful can be indicated to user equipment, that is to say, according to some embodiments, pilot power boosting by boosting one or more of: pilot power, primary control channel power, or secondary control channel power, may be triggered only when the transport block size exceeds a predetermined threshold.

According to some embodiments, a separate $E\text{-}TFCI_{ec,boost}$, namely $E\text{-}TFCI_{ec,boost,\text{MIMO}}$ (i.e. the E-DPDCH transmission rate at which boosting the E-DPCCH begins) is signalled to user equipment for rank 2 or higher transmissions. It will be understood that E-$TFCI_{ec,boost,MIMO}$ takes into account $P_{Offset}$ and is used when user equipment is transmitting using rank 2 or higher. In other cases, when transmitting in rank 1, user equipment is operable to use legacy $E\text{-}TFCI_{ec,boost}$ in determining when pilot power boosting may required.

It will be appreciated that the concepts of having MIMO uplink parameters, $\Delta T2TP_{MIMO}$ and $E\text{-}TFCI_{ec,boost,MIMO}$, in relation to boost calculations may be combined as appropriate.

Since the presence or absence of a secondary control channel, for example, S-E-DPCCH, on a primary stream may be used to indicate the rank of an UE transmission, blind detection of a secondary control channel, for example, S-E-DPCCH, is important at a base station, for example, NB.

A particular implementation of aspects described above is now described in more detail. In this example, user equipment is operable to make a rank 2 MIMO transmission. In this case, the secondary control channel, S-E-DPCCH, is sent at the same power as that of the primary control channel, E-DPCCH. Furthermore, according to this implementation, in this example, the S-E-DPCCH is boosted whenever E-DPCCH is boosted, and the user equipment is operable to boost both control channels by the same amount.

$P_{Offset}$ in this example is the power of S-E-DPCCH (after boosting if boosting is applied).

In this implementation, it is assumed that the selected E-TFCI > $E\text{-}TFCI_{ec,boost}$. Hence there is likely to be a need to boost the power of a primary control channel, E-DPCCH, or traditionally that would be the case when no secondary control channel, for example, S-E-DPCCH was being transmitted by user equipment. The gain factor of E-DPCCH is calculated using the legacy method as in Section 5.1.2.5B.1 of TS25.214. This boosted gain factor is known as β,boost.

For a rank 2 transmission in this example, $\beta_{boost}$ is the sum of the gain factors for S-E-DPCCH and E-DPCCH, i.e.:

$$\beta_{boost} = \frac{P_{E\text{-}DPCCH} + P_{S\text{-}E\text{-}DPCCH}}{P_{DPCCH}} = \beta_{ec,boost} + \beta_{s\text{-}ec,boost}$$

*Equation 1*

where $P_{E\text{-}DPCCH}$, $P_{S\text{-}E\text{-}DPCCH}$ and $P_{DPCCH}$ are the powers of E-DPCCH, S-E-DPCCH and DPCCH respectively. $\beta_{ec,boost}$ and $\beta_{s\text{-}ec,boost}$ are the boosted gain factors of E-DPCCH and S-E-DPCCH respectively (i.e. $P_{E\text{-}DPCCH}/P_{DPCCH}$ and $P_{S\text{-}E\text{-}DPCCH}/P_{DPCCH}$).

Thus for rank 2 transmission, $P_{offset} = P_{DPCCH}\,\beta_{s\text{-}ec,boost}$.

Since $P_{E\text{-}DPCCH} = P_{S\text{-}E\text{-}DPCCH}$, the amount of power in E-DPCCH and S-E-DPCCH is half that of $\beta_{boost}$. That is:

$$\beta_{ec,boost} = \beta_{s\text{-}ec,boost} = \frac{\beta_{boost}}{2}$$

*Equation 2*

As described previously, it is possible that simply reducing boosting of a primary control channel, for example, E-DPCCH, by the amount of transmission power of the secondary control channel, for example, S-E-DPCCH, could result in a "negative boost" being applied to the primary control channel, or E-DPCCH. Such a negative boost may reduce the power of the primary control channel, or E-DPCCH, below a level that is required for reliable decoding of that control channel. As a result, according to some embodiments, a "max" function is used to ensure sufficient power remains used for transmission of the primary control channel, or E-DPCCH, such that the final boosted power for primary and seconday control channels, E-DPCCH ($\beta'_{ec,boost}$) and S-E-DPCCH ($\beta'_{s\text{-}ec,boost}$), are as follows:

$$\beta'_{ec,boost} = \max\left(\beta_{ec}, \frac{\beta_{boost}}{2}\right)$$

*Equation 3*

$$\beta'_{s-ec,boost} = \max\left(\beta_{s-ec}, \frac{\beta_{boost}}{2}\right)$$

*Equation 4*

where $\beta_{ec}$ and $\beta_{s-ec}$ are the gain factors of E-DPCCH and S-E-DPCCH respectively without any power boosting.

It should be noted that the solution is also applicable for scenarios where $P_{E-DPCCH} \neq P_{S-E-DPCCH}$, for example, where S-E-DPCCH is never boosted.

Aspects aim to prevent over boosting of the transmit power of a primary control channel, for example, an E-DPCCH.

It will be understood that a MIMO specific ETFCI threshold may be used to indicate a possible need to boost a secondary stream. Equations 3 and 4 describe the maximal power function. However it will be appreciated that there needs to be a balancing point at which boosting the power of a control channel will negatively impact on the data channel. Too much power boost may cause a loss in data and the UE is constrained to a certain total power at any one instant. Aspects recognize that there is an optimization problem to solve at that instant.

The problem is that with multiple control channels, is is necessary to try and ensure channels are not over-boosted which may cause problems as described above.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of adapting transmission power of one or more physical channels operable to support signalling for use in channel estimation in a wireless telecommunications network, said signalling being transmitted by user equipment transmitting according to uplink MIMO protocols, said method comprising:

receiving an indication of a target total transmission power of channel estimation signalling;
determining a set of physical channels operating to support said signalling for use in channel estimation;
assessing total transmission power of said set of physical channels operating to support said signalling for use in channel estimation; and,
adapting transmission power of one or more of said set of physical channels operating to support said signalling for use in channel estimation if said total transmission power does not meet said target total transmission power of channel estimation signalling.

2. A method according to claim 1, wherein said set of physical channels operating to support said signalling for use in channel estimation comprises a pilot channel, a primary control channel and at least one secondary control channel.

3. A method according to claim 2, wherein said primary control channel comprises an E-DPCCH and said at least one secondary control channel comprises an S-E-DPCCH, those channels being transmitted by said user equipment on an identical E-DCH stream.

4. A method according to claim 2 or claim 3, wherein said method further comprises: adjusting transmission power of one or more of said control channels.

5. A method according to any preceding claim, wherein said method further comprises: determining a minimum transmission power of a physical channel operating to support said signalling for use in channel estimation, and adjusting transmission power of one or more of said control channels subject to said minimum transmission power of said physical channel operating to support said signalling for use in channel estimation.

6. A method according to any preceding claim, wherein said received indication of a target total transmission power of channel estimation signalling comprises a target total transmission power for user equipment operating according to non-uplink MIMO protocols and said method further comprises:

adjusting said target total transmission power of channel estimation signalling by a predetermined offset calculated for uplink MIMO operation.

7. A method according to claim 6, wherein said method further comprises receiving an indication of said predetermined offset calculated for uplink MIMO operation.

8. A method according to any preceding claim, further comprising:

receiving an indication of a threshold data transmission rate at which said method of adapting is to be implemented by said user equipment; and
implementing said method of adapting when said threshold data transmission rate is passed.

9. A method according to claim 8, wherein said indication of a threshold data transmission rate comprises an E-TFCI.

10. A computer program product operable, when executed on a computer, to perform the method of any one of claims 1 to 9.

11. User equipment operable to adapt transmission power of one or more physical channels operable to support signalling for use in channel estimation in a wireless telecommunications network, said signalling being transmitted by said user equipment transmitting according to uplink MIMO protocols, said user equipment comprising:

reception logic operable to receiving an indication of a target total transmission power of channel estimation signalling;
determination logic operable to determine a set of physical channels operating to support said signalling for use in channel estimation;
assessment logic operable to assess total transmission power of said set of physical channels operating to support said signalling for use in channel estimation; and, adaptation logic operable to adapt transmission power of one or more of said set of physical channels operating to support said signalling for use in channel estimation if said total transmission power does not meet said target total transmission power of channel estimation signalling.

~ 10

GGSN

PSTN

SGSN

Operator
IP Network

MSC

RNC

40

60

20

Macro-cell
Node B

30

50

50

Traditional UMTS Architecture

Figure 1

**FIGURE 2 : Multipath propagation**

**FIGURE 3 :** UL MIMO channel structure

| E-TFCI (7 bits) | RSN (2 bits) | HB (1 bit) | 300 |
| --- | --- | --- | --- |
| 310 | 320 | 330 | |

**FIGURE 4 :** E-DPCCH format

Europäisches
Patentamt

European
Patent Office

Office européen
des brevets

**EUROPEAN SEARCH REPORT**

Application Number

EP 12 36 0035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/082192 A1 (PELLETIER BENOIT [CA] ET AL) 5 April 2012 (2012-04-05)<br>* abstract *<br>* paragraphs [0004] - [0005], [0060] - [0064], [0066] - [0067], [0079] - [0082], [0111] - [0116], [0155] - [0156], [0172] *<br>* paragraphs [0185] - [0186], [0214] - [0215], [0217], [0227], [0229], [0236] - [0239], [0242] - [0243], [0245] *<br>* paragraphs [0249], [0251] - [0252] *<br>* claims 4-6,14-16 *<br>----- | 1-11 | INV.<br>H04W52/32<br>H04W52/34 |
| X | WO 2010/107907 A2 (SAMSUNG ELECTRONICS CO LTD [KR]; PAPASAKELLARIOU ARIS [US]; CHO JOON-Y) 23 September 2010 (2010-09-23)<br>* abstract *<br>* page 1, lines 10-11,20-25 *<br>* page 2, lines 10-25 *<br>* page 8, lines 22-29 *<br>* page 9, lines 24-29 *<br>* page 10, lines 1-6 *<br>* page 11, lines 28-29 *<br>* page 12, lines 1-10 *<br>* page 21, lines 14-25 *<br>* page 22, line 1 *<br>* page 24, lines 19-21 *<br>* page 26 - page 27 *<br>----- | 1-11 | TECHNICAL FIELDS SEARCHED (IPC)<br>H04W<br>H04B |

-/--

| The present search report has been drawn up for all claims | | |
|---|---|---|
| Place of search | Date of completion of the search | Examiner |
| The Hague | 17 July 2012 | Ntogari, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 12 36 0035

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2009/142572 A1 (ERICSSON TELEFON AB L M [SE]; EDHOLM CHRISTER [SE]; COZZO CARMELA [US]) 26 November 2009 (2009-11-26)<br>* page 9, line 3.6 *<br>* page 19, lines 4-16 *<br>* page 11, lines 10-19 *<br>* page 12, lines 16-19 *<br>* page 13, lines 1, 14-20 *<br>* page 14, lines 1-2, 20-21 *<br>* page 15, line 1 *<br>* page 18, lines 12-14 *<br>----- | 1-11 | |

**TECHNICAL FIELDS SEARCHED (IPC)**

The present search report has been drawn up for all claims

| Place of search | Date of completion of the search | Examiner |
|---|---|---|
| The Hague | 17 July 2012 | Ntogari, Georgia |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

EP 2 663 137 A1

## ANNEX TO THE EUROPEAN SEARCH REPORT
## ON EUROPEAN PATENT APPLICATION NO.

EP 12 36 0035

This annex lists the patent family members relating to the patent documents cited in the above-mentioned European search report.
The members are as contained in the European Patent Office EDP file on
The European Patent Office is in no way liable for these particulars which are merely given for the purpose of information.

17-07-2012

| Patent document cited in search report | | | Publication date | Patent family member(s) | | | Publication date |
|---|---|---|---|---|---|---|---|
| US 2012082192 | A1 | | 05-04-2012 | US | 2012082192 | A1 | 05-04-2012 |
| | | | | WO | 2012044967 | A1 | 05-04-2012 |
| WO 2010107907 | A2 | | 23-09-2010 | AU | 2010226635 | A1 | 10-11-2011 |
| | | | | CA | 2755825 | A1 | 23-09-2010 |
| | | | | CN | 102428731 | A | 25-04-2012 |
| | | | | EP | 2409532 | A2 | 25-01-2012 |
| | | | | KR | 20120003890 | A | 11-01-2012 |
| | | | | US | 2010246463 | A1 | 30-09-2010 |
| | | | | WO | 2010107907 | A2 | 23-09-2010 |
| WO 2009142572 | A1 | | 26-11-2009 | US | 2009291642 | A1 | 26-11-2009 |
| | | | | WO | 2009142572 | A1 | 26-11-2009 |

EPO FORM P0459

For more details about this annex : see Official Journal of the European Patent Office, No. 12/82

17